# FASCICULE DE BREVET EUROPEEN

(11) **EP 2 317 722 B1**
(45) Date de publication et mention de la délivrance du brevet: **10.08.2016**
(21) Numéro de dépôt: 10188388.2
(22) Date de dépôt: 21.10.2010
(51) Int. Cl.: H04L 29/06

(54) **Procédé et système pour la préservation de la bande passante dans un réseau IPTV**
Verfahren und System zur Erhaltung von Bandbreite in einem IP Fernsehnetzwerk
Method and system for the preservation of bandwidth in a IP television network

(30) Priorité: 27.10.2009 FR 0905175
(43) Date de publication de la demande: 04.05.2011
(73) Titulaire: ALCATEL LUCENT, 92100 Boulogne-Billancourt (FR)
(72) Inventeur: Toms, Yann, 91620, NOZAY (FR); Aghasaryan, Armen, 91620, NOZAY (FR); Senot, Christophe, 91620, NOZAY (FR); Bernier, Cédric, 91620, NOZAY (FR)
(74) Mandataire: Berthier, Karine

(56) Documents cités:
- EP-A1- 1 973 292
- WO-A2-2008/113827
- US-A1- 2007 288 627
- US-A1- 2009 125 948
- US-A1- 2009 157 826

## Description

La présente invention se rapporte au domaine technique des télécommunications et notamment à l'amélioration de la qualité de service dans les réseaux IPTV.

On désigne ci-après par « IPTV (Internet Protocol Television) » les services multimédia (télévision, vidéo, audio, texte, graphiques et données) délivrés, en direct ou en différé, sur des infrastructures IP. L'IPTV comprend, notamment, la télévision sur IP, la Vidéo à la Demande (Video on demand) et la Vidéo Live à la demande (Live on demand).

Avec l'avènement des services à haut débit, on enregistre un besoin de plus en plus croissant en bandes passantes fréquentielles pour la transmission des données. En particulier, ce besoin est accentué par l'apparition des nouvelles normes de transmission des services IP multimédia (Enhanced Definition TV, High Definition TV) qui présentent des contraintes de qualité de service importantes.

Pour cela, une transmission multicast est adoptée pour la transmission des flux IPTV dans le coeur des réseaux IPTV afin d'éviter la duplication des flux IPTV requis par les différents réseaux d'accès. Ceci préserve, par conséquent, la bande passante dans le coeur du réseau IPTV ainsi que décrit dans le document WO2008/113827.

Cependant, une telle solution ne peut être étendue au delà du coeur du réseau IPTV à cause de l'hétérogénéité des services requis au sein des réseaux d'accès. Une transmission unicast dans des bandes passantes limitées est donc déployée au niveau des réseaux d'accès. Néanmoins, des transmissions gourmandes en bande passante sont constamment constatées dans les réseaux d'accès IPTV, pénalisant ainsi la qualité de service perçue par des utilisateurs simultanément connectés à un même réseau d'accès IPTV.

La requête simultanée de plusieurs terminaux de réception de flux IPTV à partir d'un même réseau d'accès résulte en l'attribution d'une faible bande passante à chacun. Moins de bits sont transmis par seconde aux terminaux utilisateur connectés ce qui dégrade sérieusement la qualité du contenu IPTV (en particulier le contenu vidéo) perçue par les utilisateurs.

Un objet de la présente invention est d'améliorer la qualité de service (QoS) perçue par les utilisateurs connectés à un réseau IPTV à partir d'un même réseau d'accès.

Un autre objet de la présente invention est une utilisation optimale de la bande passante totale disponible au niveau d'un réseau d'accès IPTV.

Un autre objet de la présente invention est de préserver au mieux la bande passante allouée à un réseau d'accès IPTV afin d'assurer une QoS maximale en fonction des ressources disponibles.

Un autre objet de la présente invention est de fournir un système de capteurs capable de détecter la présence d'un utilisateur à proximité d'un terminal de réception et de déterminer le degré d'attention accordée par l'utilisateur au flux IPTV en lecture par ce terminal.

Un autre objet de la présente invention est d'assurer une exploitation mutuelle du débit total disponible dans un réseau d'accès IPTV en optimisant le nombre des flux vidéo/audio auxquels sont abonnés des terminaux utilisateur.

Est proposé, suivant un premier aspect, un procédé de préservation de la bande passante dans au moins une passerelle réseau liant un réseau d'accès au coeur d'un réseau IPTV et dans au moins une passerelle utilisateur de ce réseau d'accès connectant un terminal utilisateur à la dite passerelle réseau, le terminal utilisateur étant apte à recevoir et lire un flux vidéo à partir du réseau IPTV, ce procédé comprenant les étapes suivantes :
- détection de la présence d'un téléspectateur dans un voisinage du terminal utilisateur ;
- évaluation de l'attention du téléspectateur détecté présent, envers l'écran du terminal utilisateur affichant un flux vidéo reçu à partir du réseau IPTV ;
- désabonnement au flux IPTV (audio et video) ou vidéo uniquement en lecture par le terminal utilisateur en absence du téléspectateur détecté présent ;
- désabonnement au flux IPTV (audio et video) ou vidéo uniquement en lecture par le terminal en absence d'attention du téléspectateur détecté présent, envers l'écran du terminal utilisateur.

Est proposé, selon un deuxième aspect, un système de préservation de la bande passante dans au moins une passerelle réseau liant un réseau d'accès au coeur d'un réseau IPTV et dans au moins une passerelle utilisateur de ce réseau d'accès connectant un terminal utilisateur à la dite passerelle réseau, le terminal utilisateur étant apte à recevoir et lire un flux vidéo à partir du réseau IPTV, ce système comprenant les modules suivants :
- un système de capteurs permettant de collecter en temps réel des informations sur la présence physique d'un téléspectateur dans un voisinage du terminal utilisateur et sur son attention envers un flux vidéo reçu à partir du réseau IPTV et en lecture par le terminal utilisateur ;
- un module d'analyse des donnés captées par le système de capteurs ;
- un gestionnaire de situation permettant de synthétiser l'analyse faite par le module d'analyse ;
- un agent de décision permettant de décider du désabonnement au flux vidéo en lecture par le terminal utilisateur selon la synthèse de situation fournie par le gestionnaire de situation

Est proposé, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence aux dessins annexés dans lesquels,
- la figure 1 illustre schématiquement l'architecture d'un réseau IPTV ;
- la figure 2 illustre schématiquement des modules fonctionnels d'un terminal utilisateur de réception IPTV, selon un mode de réalisation, permettant de détecter la présence d'un utilisateur à proximité de ce terminal, d'analyser le degré d'attention accordée par l'utilisateur au contenu IPTV affiché par le terminal et d'en décider selon des règles utilisateur prédéfinies.

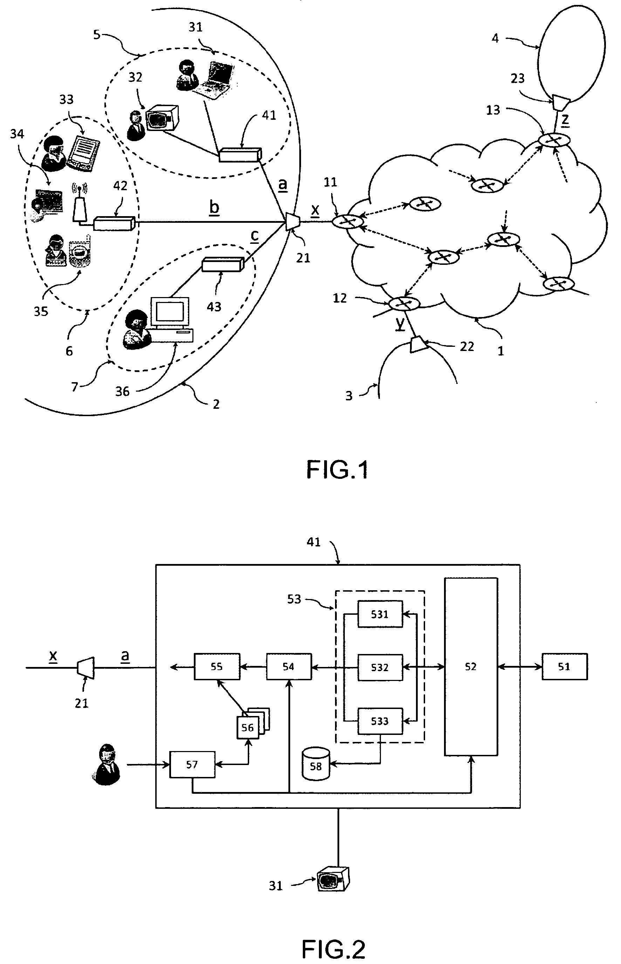

La figure 1 montre un réseau IPTV comprenant le coeur 1 du réseau IPTV, sur lequel transitent les flux IPTV en mode multicast, et des réseaux d'accès 2-4 IPTV, sur lesquels les flux IPTV sont véhiculés en mode unicast.

Des multiplexeurs 21-23 d'accès à la ligne d'abonné numérique (Digital Subscriber Line Access Multiplexer), des passerelles x, y, z réseau et des routeurs d'agrégation 11-13 Multicast IP assurent l'interconnexion entre les réseaux d'accès 2-4 et le coeur 1 du réseau IPTV. Ci-après, les multiplexeurs 21-23 sont dénommés DSLAM. Des passerelles XLAG (Cross Layer Adaptation Gateway) sont des exemples de routeurs d'agrégation 11-13 Multicast IP.

Les réseaux d'accès 2-4 transportent les données IPTV jusqu'aux terminaux 31-36 utilisateur, en association avec des passerelles a, b, c utilisateur et des adaptateurs 41-43. Les adaptateurs 41-43 sont aussi parfois désignés par le vocable décodeur, récepteur numérique, ou STB (pour Set-top Box).

Dans les réseaux domestiques 5-7, les terminaux 31-36 utilisateur de réception IPTV sont généralement raccordés, via des liaisons filaires ou sans fil, aux adaptateurs 41-43. Les terminaux utilisateur 31-36 sont des terminaux de réception, fixes ou mobiles, apte à recevoir et lire un flux IPTV. Un ordinateur (PC/MAC, fixe/mobile), une télévision, un téléphone portable, un ordinateur de poche (Personal Digital Assistant) ou tout autre terminal utilisateur apte à recevoir et afficher un flux IPTV sont des exemples de terminaux 31-36 utilisateur.

Le DSLAM 21 achemine en unicast les flux IPTV requis par les terminaux 31-36 utilisateur. L'acheminement d'un flux IPTV via les passerelles a, b, c utilisateur dépend principalement de l'existence d'un terminal 31-36 utilisateur requérant, via un adaptateur 41-43, ce flux IPTV. Dès qu'un flux n'est plus requis par un terminal 31-36 utilisateur, le DSLAM 21 se désabonne à ce flux auprès du routeur d'agrégation 11 de Multicast IP. Il en résulte la préservation de la bande passante
- sur la passerelle x réseau, liant le DSLAM 21 et le routeur d'agrégation 11 de Multicast IP; et
- sur les passerelles a, b, c utilisateur.

Il arrive fréquemment qu'un utilisateur recevant un flux IPTV sur au moins un terminal 31-36 utilisateur ne regarde pas ce flux. Il en résulte un inconvénient dans l'utilisation de la bande passante réservée au réseau d'accès 2 qui se manifeste
- au niveau de la passerelle a, b, c utilisateur ; et
- au niveau la passerelle x réseau.

En effet, la bande passante disponible au niveau de la passerelle a, b, c utilisateur ou au niveau de la passerelle x réseau est limitée et l'utilisation inconsciente d'au moins une fraction de cette bande la limite d'avantage. On entend, ici, par utilisation inconsciente le fait que personne ne regarde, ou qu'aucune attention n'est accordée à un flux IPTV en affichage sur un terminal 31-36 utilisateur. Sous la contrainte d'une bande passante totale finie, dans un tel scénario, la qualité de service perçue par des utilisateurs connectés au même réseau d'accès 2 est automatiquement appauvrie.

Par conséquent, il est avantageusement proposé d'optimiser la gestion de la bande passante au niveau des passerelles a, b, c utilisateur et/ou des passerelles x réseau, afin d'épargner la capacité totale disponible.

La préservation de la bande passante au niveau des réseaux d'accès est assurée par des modules fonctionnels, permettant
- de détecter la présence d'une personne dans une proximité du terminal 31-36 utilisateur ;
- de déterminer le degré d'attention accordée par cette personne au flux IPTV en affichage sur l'écran du terminal 31-36 utilisateur ;
- et d'en déduire l'action à exécuter correspondante.

Dans l'exemple non limitatif illustré sur la figure 2, ces modules sont embarqués dans l'adaptateur 41 (Set-top Box), en supposant qu'il est situé dans un voisinage immédiat du terminal 32 utilisateur (une télévision par exemple). Une implémentation de certains de ces modules au moins pourrait être réalisée au niveau du terminal 31-36 utilisateur ou dans un système annexe à ces terminaux.

Ces modules comprennent :
- un système de capteurs 51 permettant de collecter en temps réel des informations sur la présence physique d'un téléspectateur dans un voisinage du terminal 31 utilisateur et sur son attention face à l'écran du terminal 31 utilisateur dans lequel un flux vidéo du réseau IPTV est en lecture;
- une interface 52 de contrôle du système de capteurs 51 ;
- un module 53 d'analyse des donnés brutes captées par le système de capteurs 51 et transmises via l'interface 52 de contrôle ;
- un gestionnaire 54 de situation permettant de synthétiser l'analyse faite par le module 53 d'analyse ;
- un agent 55 de décision permettant de décider sur l'action appropriée à exécuter en fonction des préférences 56 utilisateur et de la synthèse de la situation globale, fournie par le gestionnaire 54 de situation. Les préférences 56 utilisateur sont définies à partir d'une liste de règles prédéterminées paramétrables, par le téléspectateur, via l'interface graphique 57 utilisateur.

De préférence, le système de capteurs 51 comprend une pluralité de capteurs tels que, à titre d'exemples non limitatifs, un microphone, une caméra, une caméra 3D, un appareil photo, un capteur RFID, un capteur infrarouge, un tapis tactile, un détecteur à contact, un détecteur de présence, un interrupteur de position.

Afin de recueillir des informations pertinentes sur la présence et l'attention d'un téléspectateur, le système de capteurs 51 comprend, de préférence, plus qu'un capteur pour la mesure d'une grandeur physique (son, distance, image par exemple).

En variante ou en combinaison, des éléments du système de capteurs 51 peuvent être
- intégrés ou annexés au terminal utilisateur, en particulier si celui-ci est mobile; ou
- associés à l'adaptateur 41-43, si ce dernier est dans un voisinage immédiat du terminal utilisateur (par exemple, le STB qui est généralement avoisinant la télévision).

Le système de capteurs 51 vise à collecter des informations permettant, en particulier,
- de détecter la présence d'un téléspectateur dans un voisinage prédéfini du terminal 31-36 utilisateur; et
- d'évaluer (quantifier) l'intérêt accordé par ce téléspectateur au contenu IPTV en affichage sur le terminal 31-36 utilisateur.

L'interface 52 de contrôle du système de capteurs 51 est configurée pour communiquer avec les éléments du système de capteur 51. Autrement dit, l'interface 52 de contrôle permet
- de configurer et de commander chacun des éléments du système de capteurs 51 ; et
- d'acquérir les données mesurées par le système de capteurs 51.

La tâche de configuration et de commande des éléments du système de capteurs 51 comprend, par exemples, les faits de zoomer, de changer de direction, d'appliquer un filtre, de changer la luminosité, de changer le mode de fonctionnement (jour/nuit), de changer la fréquence, de changer le contraste, de changer la résolution, ou plus généralement de pouvoir pratiquer toutes les fonctionnalités offertes par chacun des éléments du système de capteurs 51.

Les mesures physiques brutes, récupérées par l'interface 52 de contrôle sont transmises au module 53 d'analyse.

Le module 53 d'analyse est chargé
- de détecter la présence d'un téléspectateur dans le voisinage, du terminal utilisateur, scanné par le système de capteurs 51 ;
- de quantifier l'attention de ce téléspectateur envers le contenu vidéo du flux IPTV en affichage sur l'écran du terminal utilisateur à l'aide des moyens basés sur les techniques de « Eye tracking » par exemple ; et
- d'identifier ce téléspectateur.

Pour cela, le module 53 d'analyse comprend au moins
- un analyseur de présence physique 531 permettant de déterminer si une personne est présente dans un voisinage du terminal utilisateur, sur lequel est focalisé le système de capteurs 51 ;
- un analyseur d'attention 532 permettant d'évaluer le degré d'attention au contenu vidéo du flux IPTV en affichage, accordé par un téléspectateur détecté présent dans un voisinage du terminal utilisateur. L'évaluation de l'attention d'un téléspectateur face à l'écran d'un terminal utilisateur peut être obtenue en supervisant, par exemples, l'orientation du visage, l'état des yeux (ouverts, fermés), le mouvement des paupières (fréquence de battements) ;
- un analyseur d'identification 533 d'utilisateur permettant d'identifier la personne détectée présente afin d'utiliser les préférences 56 utilisateur correspondant. L'analyseur d'identification 533 d'utilisateur utilise une base de données 58 de profils utilisateurs comprenant des caractéristiques distinctives d'utilisateurs enregistrées pendant une phase d'apprentissage. L'identification d'un utilisateur peut être obtenue, par exemple, à partir d'une reconnaissance faciale, d'une reconnaissance vocale, des identifiant d'une session de connexion, de la place dans le voisinage du terminal utilisateur.

Le gestionnaire 54 de situation est chargé de capter, selon une base régulière, la situation au voisinage du terminal utilisateur en collectant et agrégeant les différentes métriques renvoyées depuis le module 53 d'analyse. Il se base, ainsi, sur les différents analyseurs 531-533 afin de mieux détecter tout changement (éloignement, inattention, endormissement par exemple) dans le comportement du téléspectateur.

Le gestionnaire 54 de situation produit un score de comportement global, ou une liste de valeurs reflétant la situation actuelle du téléspectateur. Le gestionnaire 54 de situation permet, ainsi, de synthétiser une interprétation de l'ensemble des résultats du module 53 d'analyse.

A titre d'exemple, le gestionnaire 54 de situation permet de déduire, à partir des résultats transmis depuis le module 53 d'analyse, l'endormissement du téléspectateur, l'éloignement du téléspectateur du terminal utilisateur, la présence d'aucun téléspectateur, l'inattention du téléspectateur face à l'écran du terminal utilisateur, la fenêtre comprenant le flux IPTV en lecture est réduite ou complètement cachée (dans le cas ou le terminal utilisateur est un ordinateur par exemple).

L'agent 55 de décision permet de décider de l'action appropriée à appliquer en fonction des préférences 56 utilisateur et la synthèse du gestionnaire 54 de situation. L'agent 55 de décision conduit à un nombre fini d'états qui sont définis dynamiquement par des règles. Un état est atteint dès que la situation en observation s'authentifie à une règle parmi les préférences 56 utilisateur. Un état peut être déclenché par un temporisateur ou par un changement dans le comportement en observation du téléspectateur.

Les décisions à prendre par l'agent 55 de décision sont notamment de type
- dissocier le flux vidéo du flux audio correspondant, ensuite arrêter le flux vidéo en affichage, autrement dit se désabonner uniquement au contenu vidéo du flux IPTV en réception par le terminal utilisateur ;
- se désabonner au flux IPTV (audio et vidéo) en réception par le terminal utilisateur ;
- éteindre le terminal utilisateur ;
- mettre en mode veille le terminal utilisateur ;
- déclencher l'enregistreur vidéo personnel (ou en anglais, PVR pour Personnel Video Recorder) ;
- activer Time-shift TV. Cette fonctionnalité permet d'enregistrer en local le flux IPTV en réception à l'aide d'un équipement utilisateur (un STB par exemple) qui se charge de recevoir ce flux et de le décoder. Le téléspectateur peut reprendre la lecture de ce flux IPTV ultérieurement.

Dans le cas d'un téléspectateur non identifié, des préférences 56 utilisateur par défaut sont prises en compte par l'agent 55 de décision.

Les préférences 56 utilisateur sont définies à partir d'une pluralité de règles paramétrables et éditables via l'interface graphique 57 utilisateur. A titre d'exemples illustratifs de telles règles, on peut citer :
- activer Time-Shift TV dès la détection de n minutes d'inattention envers l'écran du terminal utilisateur ;
- arrêter le flux vidéo, tout an laissant le flux audio, dès qu'aucune personne n'est détectée dans un voisinage de m mètres pendant t minutes ;
- se désabonner au flux IPTV (audio et vidéo) en réception dès qu'aucune présence de téléspectateur n'est détectée pendant t minutes.

L'interface graphique 57 utilisateur permet
- de contrôler/configurer le système de capteurs 51 via l'interface 52 de contrôle (activer/désactiver un capteur, fréquence des mesures, fonctionnalités à activer au niveau des capteurs par exemple);
- d'effectuer l'étape d'apprentissage, requise pour l'identification du téléspectateur (photo ou son de référence par exemple);
- de définir le voisinage du terminal utilisateur sur lequel focalise le système de capteurs 51 ;
- de paramétrer le gestionnaire 54 de situation (taux de tolérance sur le degré d'attention du téléspectateur par exemple) ; et
- de s'approprier des préférences 56 utilisateur, par un téléspectateur.

Le voisinage d'un terminal utilisateur est défini par l'espace sur lequel est focalisé le système de capteurs 51 (orientation d'un microphone directif, d'un appareil photo/caméra, l'emplacement d'un tapis tactile ou d'un interrupteur à contact par exemple).

Afin de poursuivre la réception d'un flux audio sans le flux vidéo, les deux étant associés à un même canal (un même flux IPTV), un nouveau canal est requis pour la transmission du flux audio via la passerelle x réseau et la passerelle a utilisateur. Ceci demande
- la dissociation, d'abord, du flux audio du flux vidéo, constitutifs du même flux IPTV; ensuite
- l'allocation d'une bande passante, pour transmette le flux audio, qui est négligeable par rapport à la bande passante épargnée grâce au désabonnement au flux vidéo.

La décision prise par l'agent 55 de décision permet, ainsi, de préserver la bande passante disponible au niveau de la passerelle a utilisateur et la passerelle x réseau, en se désabonnant au flux vidéo. Ceci évite des problèmes potentiels inhérents à la qualité de service IPTV (congestion, perte de paquets IP par exemple).

La décision prise par l'agent 55 de décision permet aussi de libérer des ressources fréquentielles aux bénéfices de l'ensemble des utilisateurs du réseau d'accès 2. Ce gain en bande passante est très utile pour assurer au mieux une qualité de service à l'ensemble des terminaux utilisateur connectés à un même réseau d'accès.

Il est à noter que le mode de réalisation, décrit ci-dessus peut être déployé avec tout terminal utilisateur apte à recevoir et afficher un flux vidéo à partir d'un réseau IPTV.

Il est à noter qu'avec certains terminaux utilisateur, un ordinateur portable 31 par exemple, certains modules ou éléments des modules précités existent dans le terminal. A titre d'exemples :
- un appareil photo, caméra ou microphones déjà intégrés dans l'ordinateur et qui peuvent être utilisés en tant qu'élément du système de capteurs 51 ;
- des applications logicielles de reconnaissances vocale et/ou faciale ou plus généralement de traitement d'image ou d'audio peuvent être utilisées par le système d'analyse 53.

Avantageusement, le mode de réalisation qui vient d'être décrit est économiquement soutenable dans la mesure où il permet de stopper le décodage et l'affichage du flux vidéo, et éventuellement éteindre l'écran du terminal utilisateur (dès lors qu'il n'y a pas de flux vidéo à lire), libérant ainsi des ressources matérielles et surtout fréquentielles au niveau des réseaux d'accès IPTV.

Il est à noter que les modes de réalisation qui viennent d'être décrits permettent d'éviter qu'un utilisateur monopolise une partie de la bande passante sans une concrète utilisation.

Il est à noter aussi que les modes de réalisation décrits ci-dessus sont indépendants de la technique multicast déployée au niveau du coeur 1 du réseau IPTV, autrement dit un multicast Push ou un multicast Pull.

Le procédé et le système de la présente invention trouvent, notamment, application dans le cas d'une réception IPTV sur des terminaux utilisateur mobiles, dès lors qu'ils favorisent l'économie de l'énergie. Ils trouvent, aussi, application dans le domaine du Pay-TV ou du Pay-per-View sur réseau IPTV, puisqu' ils permettent de se désabonner automatiquement au flux IPTV en lecture dès la détection de l'absence ou l'inattention du téléspectateur envers ce contenu.

## Revendications

1. Procédé de préservation de la bande passante dans au moins une passerelle (x) réseau liant un réseau d'accès (2) au coeur (1) d'un réseau IPTV et dans au moins une passerelle (a) utilisateur de ce réseau d'accès (2-4) connectant un terminal (31-36) utilisateur à la dite passerelle réseau (x), le terminal (31-36) utilisateur étant apte à recevoir et lire un flux vidéo à partir du réseau IPTV, ce procédé comprenant les étapes suivantes :
- collectage en temps réel par un système de capteurs (51) d'informations sur
- la présence physique d'un téléspectateur dans un voisinage du terminal (31-36) utilisateur;
- le comportement dudit téléspectateur envers l'écran du terminal (31-36) utilisateur affichant un flux vidéo reçu à partir du réseau IPTV;
- analyse desdites informations, ladite analyse comprenant notamment une quantification de l'attention dudit téléspectateur envers ledit écran ;
- synthèse de ladite analyse ;
- selon ladite synthèse, décision de
- désabonnement au flux vidéo en lecture par le terminal (31-36) utilisateur en absence de téléspectateur;
- désabonnement au flux vidéo en lecture par le terminal (31-36) utilisateur en absence d'attention du téléspectateur détecté présent envers l'écran du terminal (31-36) utilisateur.

2. Procédé selon la revendication 1, **caractérisé en ce qu'**il comprend en outre une étape d'identification du téléspectateur détecté présent dans un voisinage du terminal (31-36) utilisateur.

3. Procédé selon la revendication 1, **caractérisé en ce qu'**il comprend en outre
- une étape de dissociation d'un flux audio d'un flux vidéo, constitutifs d'un même flux IPTV ;
- une étape d'allocation d'une bande passante au flux audio.

4. Procédé selon la revendication 2, **caractérisé en ce que** l'étape d'identification utilise une base de données (54) de profils utilisateurs comprenant des caractéristiques distinctives d'utilisateurs enregistrées pendant une phase d'apprentissage.

5. Procédé selon la revendication 1, **caractérisé en ce que** le désabonnement au flux vidéo en lecture par le terminal (31-36) utilisateur prend en compte des préférences (56) utilisateur.

6. Procédé selon la revendication 5, **caractérisé en ce que** les préférences (56) utilisateur sont définies à partir d'une liste de règles paramétrables, par le téléspectateur, via une interface graphique (57) utilisateur.

7. Système de préservation de la bande passante au niveau d'au moins une passerelle (x) réseau liant un réseau d'accès (2) au coeur (1) d'un réseau IPTV et au niveau d'au moins une passerelle (a) utilisateur de ce réseau d'accès (2-4) connectant un terminal (31-36) utilisateur à la dite passerelle réseau (x), le terminal (31-36) utilisateur étant apte à recevoir et lire un flux vidéo à partir du réseau IPTV, ce système comprenant les modules suivants :
- un système de capteurs (51) permettant de collecter en temps réel d'informations sur la présence physique d'un téléspectateur dans un voisinage du terminal (31-36) utilisateur et sur son comportement envers un flux vidéo reçu à partir du réseau IPTV et en lecture par le terminal (31-36) utilisateur ;
- un module (53) d'analyse des informations captées par le système de capteurs (51), ledit module étant notamment adapté à quantifier l'attention dudit téléspectateur envers ledit écran;
- un gestionnaire (54) de situation permettant de synthétiser l'analyse faite par le module (53) d'analyse ;
- un agent (55) de décision permettant de décider du désabonnement au flux vidéo en lecture par le terminal utilisateur selon la synthèse de situation fournie par le gestionnaire (54) de situation.

8. Système selon la revendication 7, **caractérisé en ce que** le module d'analyse comprend :
- un analyseur de présence physique (531) permettant de déterminer si une personne est présente dans un voisinage, sur lequel est focalisé le système de capteurs (51), du terminal utilisateur;
- un analyseur d'attention (532) permettant d'évaluer un degré d'attention d'un téléspectateur détecté présent, envers l'écran du terminal (31-36) utilisateur affichant un flux vidéo reçu à partir du réseau IPTV ;
- un analyseur d'identification (533) d'utilisateur permettant d'identifier le téléspectateur détectée présent.

9. Système selon la revendication 7, **caractérisé en ce que** l'agent de décision prend en compte des préférences (56) utilisateur.

10. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 6.

## Patentansprüche

1. Verfahren für die Aufrechterhaltung der Bandbreite in mindestens einem Gateway (x), welches ein Zugangsnetzwerk (2) mit dem Kern (1) eines IPTV-Netzes verbindet und über mindestens eine dieses Zugangsnetzwerk (2-4) benutzende Schnittstelle (a) ein Benutzerendgerät (31-36) verbindet, welches besagtes Gateway (x) benutzt, wobei das Benutzerendgerät (31-36) ausgelegt ist für den Empfang und das Lesen eines Videodatenstroms von dem IPTV-Netz, wobei besagtes Verfahren die folgenden Schritte umfasst:
- das durch ein Sensorensystem (51) in Echtzeit erfolgende Sammeln von Informationen
- zur physischen Anwesenheit eines Fernsehzuschauers in der Umgebung des Benutzerendgeräts (31-36);
- zum Verhalten besagten Fernsehzuschauers vor dem Monitor des Benutzerendgeräts (31-36), einen Videodatenstrom anzeigend, der über das IPTV-Netz empfangen wurde.
- die Analyse besagter Informationen, wobei besagte Analyse insbesondere eine Quantifizierung der Aufmerksamkeit besagten Fernsehzuschauers vor besagtem Monitor umfasst;
- die Auswertung besagter Analyse;
- gemäß besagter Auswertung, das treffen der Entscheidung,
- wegen fehlender Anwesenheit des Fernsehzuschauers den gesichteten Videodatenstrom für das Benutzerendgerät (31-36) abzubestellen;
- wegen fehlender Aufmerksamkeit des als anwesend festgestellten Fernsehzuschauers den gesichteten Videodatenstrom für das Benutzerendgerät (31-36) abzubestellen.

2. Verfahren nach Anspruch 1, **dadurch gekennzeichnet, dass** es weiterhin einen Schritt des Identifizierens des als in der Umgebung des Benutzerendgeräts (31-36) anwesend festgestellten Fernsehzuschauers umfasst.

3. Verfahren nach Anspruch 1, **dadurch gekennzeichnet, dass** es weiterhin folgende Schritte umfasst:
- das Trennen eines Audiodatenstroms von einem Videodatenstrom, die ein und denselben IPTV-Strom bilden.
- das Zuweisen einer Bandbreite für den Audiodatenstrom.

4. Verfahren nach Anspruch 2, **dadurch gekennzeichnet, dass** der Schritt des Identifizierens eine Datenbank (54) mit Benutzerprofilen benutzt, welche im Zuge einer Anlernphase erworbene, unterscheidende Merkmale der angemeldeten Benutzer umfasst.

5. Verfahren nach Anspruch 1, **dadurch gekennzeichnet, dass** das Abbestellen des aktuell vom Benutzerendgerät (31-36) gelesenen Videodatenstroms die Benutzerpräferenzen (56) berücksichtigt.

6. Verfahren nach Anspruch 5, **dadurch gekennzeichnet, dass** die Benutzerpräferenzen (56) für den Fernsehzuschauer über eine grafische Benutzeroberfläche (57) auf der Grundlage einer Liste parametrierbarer Regeln definiert werden.

7. System für die Aufrechterhaltung der Bandbreite in mindestens einem Gateway (x), welches ein Zugangsnetzwerk (2) mit dem Kern (1) eines IPTV-Netzes verbindet und über mindestens eine dieses Zugangsnetzwerk (2-4) benutzende Schnittstelle (a) ein Benutzerendgerät (31-36) verbindet, welches besagtes Gateway (x) benutzt, wobei das Benutzerendgerät (31-36) ausgelegt ist für den Empfang und das Lesen eines Videodatenstroms von dem IPTV-Netz, wobei besagtes System die folgenden Module umfasst:
- ein Sensorensystem (51) zum in Echtzeit erfolgenden Erfassen von Informationen zur physischen Anwesenheit eines Fernsehzuschauers in der Umgebung eines Benutzerendgeräts (31-36) und zu seinem Verhalten bezüglich eines über ein IPTV-Netz empfangenen Videodatenstroms, der über das Benutzerendgerät (31-36) gesichtet wird;
- ein Modul (53) zur Analyse der über das Sensorensystem (51) erfassten Informationen, wobei besagtes Modul insbesondere dafür ausgelegt ist, um die Aufmerksamkeit zu quantifizieren, die besagter Fernsehzuschauer besagtem Monitor schenkt;
- eine Situationsverwaltungsvorrichtung (54), die eine Synthese der vom Analysemodul (53) vorgenommenen Analyse ermöglicht;
- ein Entscheidungsmittel (55), die Entscheidung des Abbestellens des vom Benutzerendgerät gesichteten Videodatenstroms gemäß der von der Situationsverwaltungsvorrichtung (54) vorgenommenen Synthese der Situation.

8. System nach Anspruch 7, **dadurch gekennzeichnet, dass** besagtes Analysemodul umfasst:
- einen Analysator der physischen Anwesenheit (531), der ermöglicht zu bestimmen, ob eine Person sich in einer Umgebung des Benutzerendgerät aufhält, die von einem Sensorensystem (51) abgedeckt wird;
- einen Aufmerksamkeits-Analysator (532), der das Bemessen des Aufmerksamkeitsgrads eines Fernsehzuschauers ermöglicht, der als in der Umgebung des Monitors des Benutzerendgeräts (31-36) anwesend festgestellt wurde, der einen Videodatenstroms anzeigt, der über das IPTV-Netz empfangen wird;
- Analysator zur Identifizierung eines Benutzers (533), der die Identifizierung des als anwesend festgestellten Fernsehzuschauers ermöglicht.

9. System nach Anspruch 7, **dadurch gekennzeichnet, dass** das Entscheidungsmittel die Benutzerpräferenzen (56) berücksichtigt.

10. Computerprogramm-Produkt, welches auf einem Speichermedium implementiert wird und dazu geeignet ist, innerhalb einer elektronischen Datenverarbeitungseinheit eingesetzt zu werden und Befehle für das Ausführen eines Verfahrens gemäß einem der Ansprüche 1 bis 6 umfasst.

## Claims

1. A method for preserving bandwidth in at least one network gateway (x) linking an access network (2) to the core (1) of an IPTV network and in at least one user gateway (a) of that access network (2-4) connecting a user terminal (31-36) to said network gateway (x), the user terminal (31-36) being able to receive and read a video flow from the IPTV network, which method comprises the following steps:
- collecting information through a sensor system (51) in real time about:
- the physical presence of a viewer in the vicinity of the user terminal (31-36);
- the behavior of said viewer towards the screen of the user terminal (31-36) displaying a video flow received from the IPTV network.
- analyzing said information, said analysis particularly comprising a quantification of the attention of said viewer towards said screen;
- summarizing said analysis;
- based on said analysis, deciding to:
- unsubscribe from the video feed being played by the user terminal (31-36) in the absence of a viewer;
- unsubscribe from the video feed being played by the user terminal (31-36) in the absence of attention from the viewer who is detected to be present towards the screen of the user terminal (31-36).

2. A method according to claim 1, **characterized in that** it further comprises a step of identifying the viewer detected to be present in a vicinity of the user terminal (31-36).

3. A method according to claim 1, **characterized in that** it further comprises
- a step of dissociating an audio flow from a video flow, which had formed a single IPTV flow;
- a step of allocating bandwidth to the audio flow.

4. A method according to claim 2, **characterized in that** the step of identifying uses a database (54) of user profiles comprising distinctive user characteristics saved during a learning phase.

5. A method according to claim 1, **characterized in that** the unsubscribing from the video flow being played by the user terminal (31-36) takes into account user preferences (56).

6. A method according to claim 5, **characterized in that** the user preferences (56) are defined from a list of rules configurable by the viewer via a graphical user interface (57).

7. A system for preserving bandwidth within at least one network gateway (x) linking an access network (2) to the core (1) of an IPTV network and in at least one user gateway (a) of that access network (2-4) connecting a user terminal (31-36) to said network gateway (x), the user terminal (31-36) being able to receive and read a video flow from the IPTV network, which system comprises the following steps:
- a system of sensors (51) making it possible to collect information in real time about the physical presence of a viewer in the vicinity of the user terminal (31-36) and about the behavior of said viewer towards a video flow received from the IPTV network and being played by the user terminal (31-36);
- a module (53) for analyzing the information captured by the system of sensors (51), said module being particularly useful for quantifying the attention of said viewer towards said screen;
- a situation manager (54) that makes it possible to summarize the analysis conducted by the analysis module (53);
- a decision agent (55) that makes it possible to decide whether to unsubscribe from the video feed being played by the user terminal depending on the situation provided by the situation manager (54).

8. A system according to claim 7, **characterized in that** the analysis module comprises:
- a physical presence analyzer (531) that makes it possible to determine whether a person is present in a vicinity, on which the system of sensors (51) is focused, of the user terminal;
- an attention analyzer (532) that makes it possible to evaluate a degree of attention from the viewer detected to be present, towards the screen of the user terminal (31-36) displaying a video feed received from the IPTV network;
- a user identification analyzer (533) that makes it possible to identify the viewer detected to be present.

9. A system according to claim 7, **characterized in that** the decision agent takes into account user preferences (56).

10. A computer program product implemented on a memory medium, capable of being implemented within at least one computer processor and comprising instructions for implementing a method according to any one of the claims 1 to 6.
